Europäisches Patentamt

European Patent Office

Office européen des brevets

(19)

(11) Publication number: **0 063 189**
**B1**

(12) **EUROPEAN PATENT SPECIFICATION**

(45) Date of publication of patent specification: **19.06.85**

(51) Int. Cl.⁴: **B 29 C 47/12**

(21) Application number: **81301716.7**

(22) Date of filing: **16.04.81**

(54) **Method and apparatus for forming an integral closure for a thermoplastic container.**

(43) Date of publication of application:
**27.10.82 Bulletin 82/43**

(45) Publication of the grant of the patent:
**19.06.85 Bulletin 85/25**

(84) Designated Contracting States:
**BE DE FR IT**

(56) References cited:
**GB-A-1 463 907**
**GB-A-2 046 660**
**US-A-3 429 004**
**US-A-3 462 332**

(73) Proprietor: **THE DOW CHEMICAL COMPANY**
**Dow Center 2030 Abbott Road Post Office Box 1967**
**Midland Michigan 48640 (US)**

(72) Inventor: **Sutrina, Thomas Albert**
**517 Woodland Drive**
**Rockford Illinois 61108 (US)**
Inventor: **Behr, Raymond Douglas**
**4511 Huron Court**
**Midland Michigan 48640 (US)**

(74) Representative: **Allard, Susan Joyce et al**
**BOULT, WADE & TENNANT 27 Furnival Street**
**London EC4A 1PQ (GB)**

Courier Press, Leamington Spa, England.

## 0 063 189

### Description

This invention relates to a high speed cast process and apparatus for making an improved film or sheet product with integral fastening elements.

More particularly, this invention relates to a method and apparatus of in-line forming of integral fastening elements with film or sheet stock to be made into bags or other containers which are closable by the fastening elements.

For a considerable period of time, bags with integral fastening elements have been made by the blown film process similar to that taught in U.S. Patent No. 3,340,116, for example. In that process the fastening elements are extruded from the same polymer melt streams through an annular die containing extrusion orifices. Another technique for manufacturing integral fastening elements is taught, for example, in U.S. Patent No. 3,462,332 which discloses a cast film process wherein the fastening elements are extruded separately from the film. These fastening elements are thereafter joined to the film by being brought together against a rotating cooling roll while the film and fastening elements are still in a fusible state.

While both the prior art blown film and cast film processes have produced commercial products, those made by the relatively faster cast film process disclosed in U.S. 3,462,332 have lacked certain advantages. In particular, the ability of fastening elements to resist rotation to obtain better interlocking remained a desired end. The ability to readily and controllably make thickened bases for the fastening elements yet maintain high production speeds, with the ability to make multiple and variable sized bags out of a single cast film, all remained a need until the present invention. While U.S. Patents Nos. 3,198,228 and 3,338,284 show thickened bases, these are not found in a cast process. Also to be desired was to have cast die lips of sufficient thickness so as not to be susceptible to damage. The reliable process for producing superior integral fastening elements of the present invention, which may be a high speed process, meets the needs left unanswered by the prior art.

The invention leads to flexibility and hardware and product improvements heretofore unknown to the art. The present invention permits forming of a thickened base for the fastening elements in order to permit more erect elements which do not bend or rotate out of alignment when it is desired to interlock or disengage them. In effect, extra base strips are extruded together with the fastening elements and are joined to a separately extruded film or sheet close to their die exits. The fastening elements with their integral bases are joined to the film or sheet stock at a desired disposition to permit ready fusing of the thickened bases to the film or sheet stock which is, in turn, formed into bags or containers. By this invention, the location and width of the base strips on the fastening elements can be changed without affecting the film or sheet extrusion. The thickness of the base strips extruded with the fastening elements are independent of the film or sheet stock thickness. The present invention also permits the production of two or more bags or containers of varying size from the same film extrusion since the thickened base strips can be a base for a plurality of fastening elements varyingly spaced apart. The sheet or film die lips can remain wide and therefore less susceptible to damage and still not interfere with adhesion between the fastening elements and the film or sheet stock.

The invention resides in a method for forming an integral thermoplastic fastening element on a thermoplastic film or sheet extruded from a film die comprising the steps of extruding at least one fastening element in an angularly disposed relationship towards said film, joining said fastening element and film, cooling said film and fastening element upon a chill roll after said joining, and directing said joining so as to occur closer to the film die than to the chill roll.

The invention further resides in an apparatus for forming an integral thermoplastic fastening element on a cast film or sheet, the apparatus comprising an extrusion die having an extrusion channel ending in extrusion die lips, the die lips presenting surfaces defining a plane, a side of the die presenting a face angularly disposed towards the extrusion channel and die lips, an extrusion die block located adjacent the face, a die plate secured to the die block, the die plate having a leading edge, the leading edge being located out of the plane of the die lips, the die block having an extrusion channel disposed angularly therein and opening adjacent the exit of the die lips so as to increase the acuteness of the angularity of extrudate issuing from the die plate with respect to extrudate issuing from the die lips, and a chill roll located below the extrusion die and die plate.

The invention further resides in a cast, relatively unoriented film or sheet having integral relatively stiff fastening members, each of said fastening members having base strips, said base strips secured to said film or sheet for at least 90 percent of each base width, whereby said base strips provide rigidity for the fastening members for each opening and closing despite the cast film remaining relatively unoriented.

Figure 1 is a schematic elevational view showing an extrusion apparatus for integrally forming fastening elements on film or sheet;

Figure 2 is an enlarged schematic elevational view of a sheeting die and fastening element, die block and plate as illustrated as part of the extrusion apparatus of Figure 1;

Figure 2A is a frontal view of the die block of Figure 2 showing a mechanism for adjusting the die block location;

Figure 3 is an enlarged schematic bottom view looking in the direction of line 3—3 of Figure 2 showing a plurality of die blocks and plates as associated with the film or sheeting die and particularly illustrating the fastening element die slots and the sheeting die orifice;

2

# 0 063 189

Figure 4 is an enlarged cross-sectional view of the film or sheeting die and fastening element die plate taken along section 4—4 of Figure 3 illustrating the extrusion of the film or sheeting stock as it is combined with a fastening element and its base, a modified arrangement of a die plate being shown in dotted lines;

Figure 5 is a view like Figure 4 showing the die plate spaced from the film or sheet die by an intervening shim;

Figures 6 and 7 are similar to Figure 5 with the location of the die plate changed; and

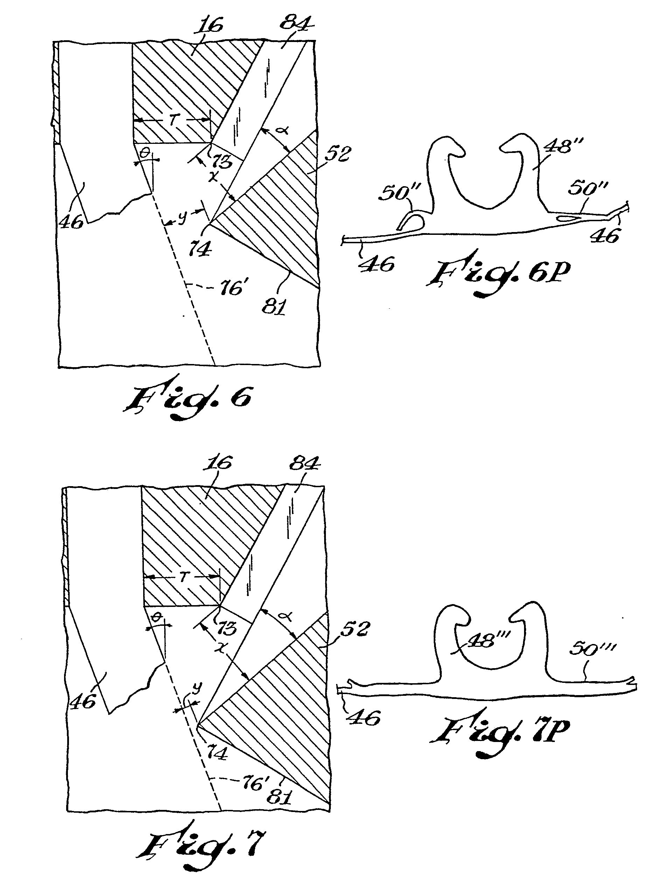

Figures 4P, 5P, 6P and 7P are enlarged schematic cross-sectional views of representative female profiles formed by positioning the dies as illustrated in Figures 4, 5, 6 and 7, respectively.

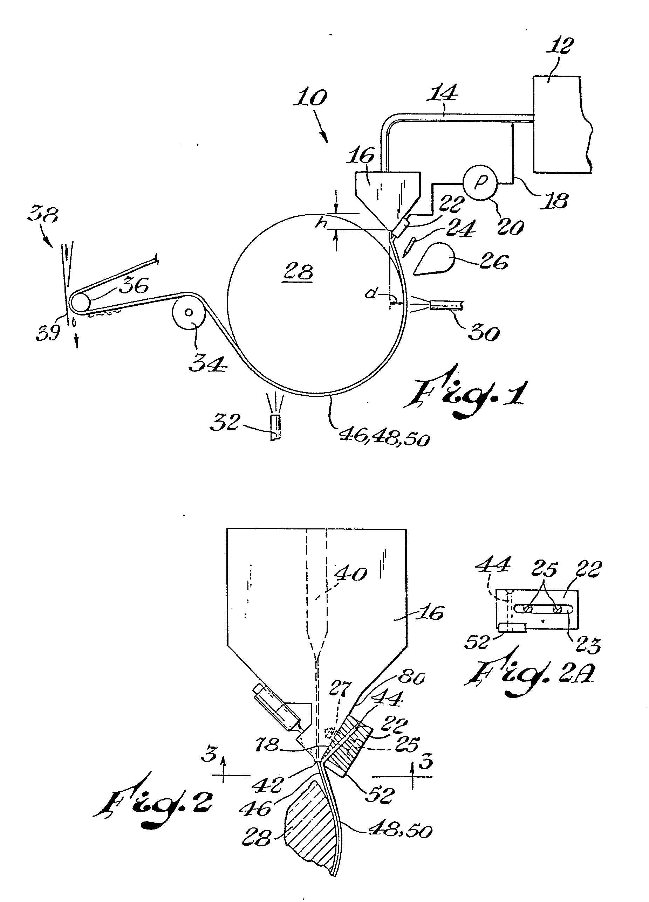

Apparatus 10 illustrated in Figure 1 comprises a conventional screw extruder 12. Extending outwardly from extruder 12 is an extruder pipeline 14 for feeding a synthetic resin to a main sheeting or film die 16. For convenience, die 16 will hereinafter be called film die even though it is capable of extruding either a film or a sheet usable in this invention. Feeding from extruder pipeline 14 is a second extruder pipeline 18 which, through pump 20, supplies resin to a plurality of die blocks 22. Each die block 22 and an associated die plate 52 provide an extrusion path for extruding fastening elements which combine with the film leaving the film die 16. This apparatus permits the extrusion and fusion of fastening elements with strips of film at their base to a sheet or film extruded from the film die 16. The fastening elements, base and film are represented by reference characters 48, 50, 46, respectively, as illustrated in Figures 1, 2 and 4P. These elements combine extremely close to the extrusion die lips, the joining locations illustrated in Figures 1 and 2 being exaggerated only to show that they extrude as separate components. The apparatus is capable of making cast film with multiple sets of generally U-shaped and generally arrow-shaped fastening elements, shaped like those shown in U.S. Patent No. 3,340,116, for example, integrated with the thickened base strips of film later described in detail.

An air jet 24 and/or air knife 26 can be used to assure good contact of the film and fastening elements with a chill roll 28 while screens or shields (not shown) can optionally block air flow in front of each fastening element to prevent distortion of the malleable extrusion. The air jets above the air knives pin the edges of the drawn film extrusion to the chill roll to reduce narrowing of the film and thickening of the film edge. Below air knife 26 preferably are located water jets 30 which are aligned with each of the fastening elements to cool the same. It may be desirable to add second water jets 32 located on the side of the chill roll opposite from the air knife to be certain that the fastening elements are fully cooled before the same are wound.

Preferably, the combined film/fastening elements are taken off the chill roll and passed across a grooved roll 34, which can contain water suction means, and are then passed over a second take-off roll 36 which can contain a vacuum assist to hold the film closer thereto. Immediately adjacent the roll 36 is an air jet mechanism 38 to remove any excess water remaining on the extruded film fastening elements after they leave roll 36. The lower end of the air jet mechanism contains a flange or tongue 39 extending below the vertical tangent point of roll 36. The air jet (see arrows) makes tangential contact with the extruded film/fastening element combination. The air jet velocity between the tongue and roll atomizes the water which separates from the film along the path of the tongue. From the roll 36, the film/fastening element combination is taken to a wind-up roll (not shown) or to a mechanism (not shown) for actually forming containers from the film/fastening element combination.

Figures 2 to 4 show more detailed views of the sheeting die 16 and fastening element die block 22 illustrated in Figure 1. Polymer entering channel 40 from pipeline 14 extrudes outwardly from film forming slot 56 past corners 42 of die lip 62 adjacent the lower end of the sheeting die 16. Die block 22 is secured to the side of the film die 16 with bolts 25 extending through slot 23. The die plate 52 is bolted to the bottom surface of die block 22. A plurality of die bolt holes 27 allow for varying placement of the die blocks, and the slot 23 in each die block allows for adjustment of the die block with respect to each bolt. Each die block 22 is placed so that a lower or leading edge 74 of the die plate 52 is below the die lip 62 of film die 16. Resin from pipeline 18 passes through a channel 44 which is disposed angularly within the die block 22 and is extruded through profile orifices 68 and 70 in die plate 52 and meets with the film 46 immediately adjacent the lowermost extent of die lip 62 of the film die thereby joining the fastening elements 48 and base 50 to form the film/fastening element combination 46, 48 and 50. The angular disposition of the exit of the channel 44 increases the acuteness of the angularity of the extrudate issuing therefrom so as to increase the closeness of the joining of the film/fastening element combination.

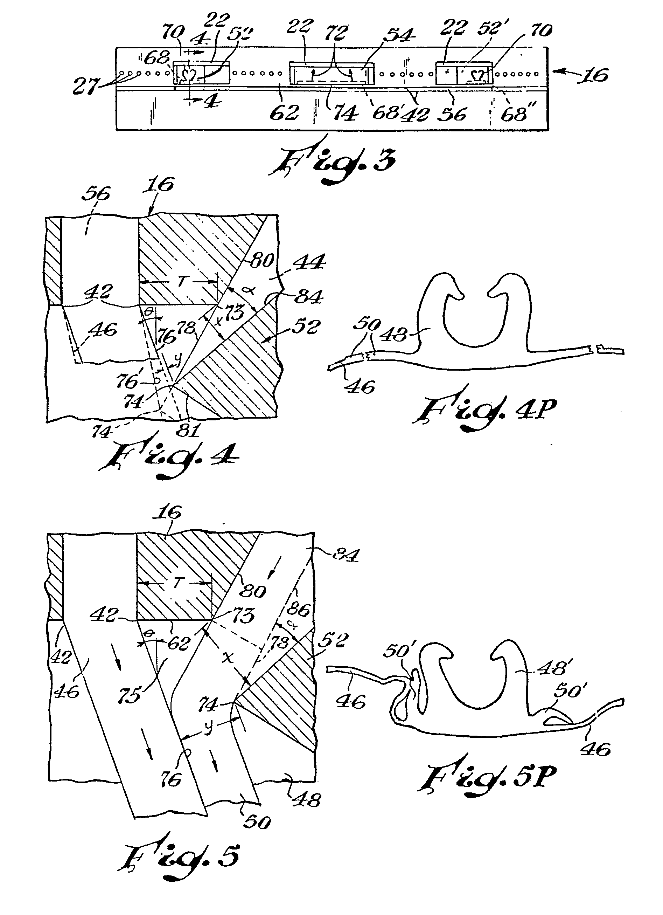

Die block 22 carries female die plates 52 and 52', having left and right hand female profile orifices 70, and male die plate 54 having left and right hand male profile orifices 72. These are seen in Figure 3 which is a view looking at the face of fastener die blocks 22 as secured to film die 16. Male and female profiles 48 exit from orifices 70 and 72 and film strips forming base 50 exit from orifices 68, 68' and 68'' together with profiles 48. The film from film die 16 exits from film slot 56 and is joined with the profiles and their base 50 immediately adjacent die lip 62.

Figures 4 and 5 are enlarged detailed drawings of the arrangement of the film die 16 and die plate 52 schematically showing how closely it is believed the film/fastening element unites adjacent to the die lip 62. If film die 16 and die plate 52 are properly arranged with respect to one another, they will produce a satisfactory film/fastening element combination typified by Figure 4P. If not, an unsatisfactory film/fastening element combination as typified by Figure 5P can result.

A fundamental problem in extruding a fastening element on cast film is to obtain satisfactory adhesion

3

of the element to the film. It has been discovered that the closer the fastening element can be joined to the film as the latter issues from the film die, the better the chances are that satisfactory adhesion will occur, particularly at high speed extrusion rates. Figure 4 illustrates a particular arrangement which has been found to permit high speed extrusions, in excess of 3658 meters/hour (200 feet per minute), while obtaining satisfactory film/fastening element adherence as typified by Figure 4P.

To bring the extrusion of the base 50 of the fastening element (through channel 44 so that it joins film 46 issuing from channel 56) closely adjacent to the die lip 62, it is desirable to make the distance "T" of the die lip as short as practical and to have the base 50 angularly disposed towards film 46. The distance T should not be so short, however, that the die lip 62 forms a knife edge, which is easily subject to damage. For a working embodiment, a relatively wide distance T of from about 0.0508 cm (0.020 inch) to 0.0762 cm (0.030 inch) has been found practical because of the angularity of extrusion built into the apparatus by this invention.

The extrusion of film 46 can also be angled towards the extrusion of the base 50 by the relative location of the extrusion channel, as the film exits at end corners 42, with respect to the chill roll 28. For example, by locating the extrusion channel back a distance "d" from a vertical tangent point of the chill roll 28, and a distance "h" from a horizontal tangent point of the chill roll 28 (Figure 1), the angle θ of the film extrudate 46 with respect to the vertical can be varied.

Likewise, by providing an angular face 80 on the film die 16, along which a matching surface 78 on the die plate 52, the die plate can slide up and down on the angular face 80 before being clamped in position, as shown in Figures 2 and 2A. Thus, the lower or leading edge 74 of die plate 52 can be located at a desired position with respect to an adjacent film surface 76. This, therefore, determines not only the angular disposition of the base 50 with respect to the film 46, but also the closeness of the two when they engage. The distance between the film surface 76, (shown extended by a dotted line in Figure 4) and die plate leading edge 74 is designated as distance "y".

The gap distance between the face 80 of the film die 16, at an edge 73 of die lip 62 from an inner face 84 of the channel 44 is designated "x". The bevel or angle α is the angular relationship between faces 80 and 84.

Several runs were made using the die arrangement shown in Figure 4 to test the variables as they may affect adhesion. In some cases the resin was varied, in others the die lip distance T was varied, the angle θ varied by changing distances d and h, the bevel angle α was varied, and the gap distance x was varied. The resins used were low density polyethylene resins. The successful runs are shown in Table I.

TABLE I

| Run | Dow designation | Resin | | "T" Width of die lip (mm.) | d (cm.) | h (cm.) | Bevel <α(°) | "x" Min. gap for adhesion (mm.) |
| | | Melt index | Density (g/cc) | | | | | |
|---|---|---|---|---|---|---|---|---|
| 1 | PE 747 | 6 | .922 | .66 | 4.82 | 11.17 | 30 | .33 |
| 2 | " | 6 | .922 | .66 | 8.38 | 7.62 | 30 | .33 |
| 3 | " | 6 | .922 | .76 | 6.35 | 10.67 | 20 | .33 |
| 4 | " | 6 | .922 | .76 | 6.35 | 10.67 | 30 | .36 |
| 5 | " | 6 | .922 | .76 | 5.08 | 11.43 | 20 | .33 |
| 6 | " | 6 | .922 | .76 | 5.08 | 11.43 | 30 | .38 |
| 7 | " | 6 | .922 | .66 | 4.82 | 11.43 | 30 | .33 |
| 8 | " | 6 | .922 | .66 | 0.0 | 16.52 | 30 | .33 |
| 9 | PE 641 | 2 | .922 | .66 | 4.82 | 11.43 | 30 | .30 |
| 10 | PE 647 | 6 | .923 | .66 | 4.82 | 11.43 | 30 | .33 |
| 11 | PE 747 | 6 | .922 | .66 | 4.82 | 11.43 | 45 | .33 |
| 12 | " | 6 | .922 | .51 | 5.08 | 11.43 | 30 | .36 |

These runs produced fastener female profiles 48 and integrated bases 50 which adhered well to the film 46 typified by those shown in Figure 4P. While female profiles are shown for convenience, it should be appreciated that male profiles would be similarly formed. When the gap x was reduced below that

4

indicated in Table I unsatisfactory adhesion occurred, such as illustrated in Figures 5P or 6P, for example. In these runs it was found that gap x always had to exceed 0.028 cm (.011 inch) to provide a possibility of satisfactory adhesion even though other factors were varied. In all the runs shown in Table I, the leading edge 74 of the die plate 52 was located below the bottom of the die lip 62 of the film die. Without this disposition, satisfactory adhesion was not obtained. For example, a run was made under the same conditions as Run 7 of Table I except that the gap dimension x was set at 0.0508 cm (0.020 inch), to provide the best chance for adhesion, but with the leading edge 74 of the die plate being flush with the die lip 62 of the film die. Unsatisfactory adhesion resulted. It does not appear to matter whether bottom surface 81 of the die plate is angularly or horizontally disposed from edge 74.

Additional runs were made to determine the possible effect of the distance "y" between the leading edge 74 of the die plate 52 and the (dotted line) film surface 76 of the film 46 based on a fixed angle θ even though the leading edge 74 might cause interference with the (dotted line) film surface. This is shown in Figure 4 where the dotted line of leading edge 74 extends past the projected dotted line of surface 76 of the film 46 and is pushed back to the film position shown in dotted lines by projected (dotted line) surface 76'. Actually, the dotted line film position would be pushed back even further by base 50 passing between leading edge 74 and film surface 76. A similar situation would also occur in Figure 7 where the distance "y" provides an insufficient clearance for the base 50.

In these additional runs, the resin used was the same, the width of channel 56 was 0.051 cm (0.020 inch); the distance T was 0.066 cm (0.026 inch); the angle α was kept at 20°; angle θ was kept at 19°, with d=4.826 (1.9 inches) and h=11.43 cm (4.5 inches); the film take-away speed was 3840 meters/hour (210 ft/min), and the chill roll diameter was 61 cm (24 inches).

The other conditions were varied, however, as illustrated in Figures 5, 6 and 7. In each of these cases, a shim 84 was inserted to permit greater variation in the gap x and the location of the leading edge 74, i.e., dimension y. The variables are listed in Table II, the width of shim 84 being the distance between face 86 and face 80 as shown in Figure 5.

TABLE II

| Run | Width of shim millimetres | Gap x (mm) | Distance y (mm) |
|---|---|---|---|
| Figure 5 | 0.38 | 0.51 | 0.41 |
| Figure 6 | 0.25 | 0.41 | 0.30 |
| Figure 7 | 0.25 | 0.51 | 0.05 |

The profile achieved with the run of Figure 5 is represented by Figure 5P, Figure 6 by Figure 6P and Figure 7 by Figure 7P. The adhesion of base 50' to film 46 as shown in Figure 5P leaves large holes or unadhered sections and results in a clearly unsatisfactory profile. The adhesion shown between base 50'' and film 46 shown in Figure 6P is improved, at least on one side, but the profile still remains unacceptable because of the poor adhesion on the other side. Note that distance y is decreased in the Figure 6 run as compared to the Figure 5 run. As distance y is decreased even further, as in the Figure 7 run, adhesion between base 50''' and film 46 becomes greatly improved. The profile is satisfactory for commercial purposes as adhesion occurs over at least 90 percent of the base width. Additional runs where distance y was reduced further, even to a negative dimension, i.e., as shown in phantom in Figure 4, with all other conditions being the same as run Figure 7, found adequate adhesion and produced satisfactory profiles. Preferably y is less than 0.030 cm (0.012 in.)

Also viewing Figures 4 and 7 and 4P and 7P, it is observed that in these particular arrangements the leading edge 74 of the die plate not only is below but is located laterally inwardly toward film surface 76 with respect to edge 73 of the film die for satisfactory adhesion to occur. Where leading edge 74 is located outwardly of edge 73, as shown in Figure 5, or even directly below edge 73, as shown in Figure 6, unsatisfactory adhesion occurred (as illustrated in Figures 5P and 6P, respectively). Where the leading edge 74 is located both below and inwardly of edge 73, the polymer stream through channel 44 is urged towards the die lip 62 and the film 46 to achieve early joining.

From the various runs illustrated in Tables I and II, it can be seen that a satisfactory fastening element is extruded onto a film at high speeds, even with a relatively wide die lip if the bottom of the die plate is located below the bottom of the film die, and where the gap x is sufficiently large, and the distance y is not too great so that combining of the fastening element with the film can occur closely adjacent the die lip. In fact, the combining occurs so closely that it is not detectable by the naked eye. It is not known what actually occurs in area 75 between base 50 and film 46 or of what dimension the area is. Under the above conditions, the base 50 has excellent adhesion to the film surface 76. These runs had profiles (male or female) of about 1.32 mm (52 mils) in height. Equally good results were obtained with profiles of 1.57 mm (62 mils) in height.

Once a satisfactory fastening element has been formed with the film, the film can be cut and sealed to form containers in the conventional manner. The arrangement of Figure 3 makes it possible to form two containers or bags because the film is provided with two sets of male and female fastening elements. Other combinations of fastening elements and spacing on a single film can be achieved with the apparatus of this invention.

The present invention has several apparent advantages. It makes possible the forming of fastening elements on cast film at higher speeds than heretofore possible. It permits forming of a base for the fastening element in a cast process so as to present a more rigid, relatively non-rotatable element which greatly facilitates interlocking between the male and female elements. It permits the use of a relatively wide die lip so that the dip lips are less subject to damage (than if they were of a knife edge or narrow configuration) without sacrificing adhesion between the fastening element and the film. The invention allows for variations in the base and male and female profiles. These may be formed from separate polymer sources, making it possible to form the fastening elements of different materials than the film itself. It is also possible to produce two or more containers from the same film extrusion since the thickened base can form the base for two fastening elements each of which is strong enough to be pulled on when disengaging the fastening elements. It is also possible to vary the locations and numbers of male and female profiles on a given film extrudate.

**Claims**

1. A method for forming an integral thermoplastic fastening element on a thermoplastic film or sheet extruded from a film die which method comprises the steps of extruding at least one fastening element in an angularly disposed relationship towards the film, joining the fastening element and film, cooling the film and fastening element upon a chill roll after the joining, and directing the joining so that it occurs closer to the film die than to the chill roll.

2. A method as claimed in claim 1 wherein the joining of the fastening element and film is directed to occur immediately adjacent a die lip of the film die, the fastening element comprising a base which is coextruded with a male or female profile, extending the base and profile at an angular disposition towards the film, and joining the base to the film.

3. A method as claimed in claim 2 wherein the fastening element is extruded through a die plate, locating the die plate below the film die and towards the film to provide joining immediately adjacent the die lips of the film die.

4. A method as claimed in claim 2 or claim 3 wherein the base has a cross-sectional thickness (x) in excess of 0.028 cm (0.011 in).

5. A method as claimed in any one of claims 2 to 4 wherein the base is extruded at a distance (y) of less than 0.030 cm (0.012 in) from the film.

6. A method as claimed in any one of claims 1 to 5 which includes the step of simultaneously extruding a pair of fastening elements through a die plate, each fastening element having a base which is adapted to be joined to the film, one fastening element base having integrally formed therewith a male profile, and another fastening element base having integrally formed therewith a female profile.

7. A method as claimed in any one of claims 1 to 5 which includes the step of simultaneously extruding a plurality of pairs of fastening elements through a die plate, each fastening element having a base which is adapted to be joined to the film, one fastening element base of a pair of elements having integrally formed therewith a male profile, and another fastening element base of the pair of elements having integrally formed therewith a female profile.

8. An apparatus for forming an integral thermoplastic fastening element on a cast film or sheet, the apparatus comprising an extrusion die (16) having an extrusion channel (56) ending in extrusion die lips (62), the die lips (62) presenting surfaces defining a plane, a side of the die presenting a face (80) angularly disposed towards the extrusion channel (56) and die lips (62), an extrusion die block (22) located adjacent the face (80), a die plate (52) secured to the die block (22), the die plate (52) having a leading edge (74), the leading edge (74) being located out of the plane of the die lips (62), the die block (22) having an extrusion channel (44) disposed angularly therein and opening adjacent the exit of the die lips (62) so as to increase the acuteness of the angularity of extrudate issuing from the die plate (52) with respect to the extrudate issuing from the die lips (62) and a chill roll (28) located below the extrusion die (16) and die plate (52).

9. Apparatus as claimed in Claim 8, wherein the die block (22) is adjustably mounted with respect to the angular face (80) of the extrusion die (16), the leading edge (74) of the die plate (52) facing towards the extrusion die lips (62) and being located below the bottom of the extrusion die lips (62).

10. Apparatus as claimed in Claim 9, wherein the leading edge (74) of the die plate (52) is located laterally inwardly from the outer edge of a respective one of the die lips (62) adjacent the die block (22) toward the exit of the extrusion die channel (56).

11. Apparatus as claimed in Claim 9 or Claim 10 including adjusting means (27, 23) for positioning the die plate (52) with its leading edge (74) under the die lip (62) adjacent the die block (22).

12. Apparatus as claimed in Claim 11, wherein the distance (y) of the leading edge of the die plate (52) from the surface of a film or sheet issuing from the die extrusion channel (56) is less than 0.030 cm (0.012 inch).

13. Apparatus as claimed in any one of Claims 8 to 12, wherein the width of the die lip (62) on the side of the extrusion die (16) adjacent the die block (22) is from 0.0508 cm to 0.0762 cm (0.02—0.03 inch) to lessen the likelihood of die lip damage.

14. Apparatus as claimed in any one of Claims 9 to 13 wherein the die plate (52) includes fastener-shaped orifices and base-shaped orifices in open communication with each other and the die block extrusion channel (44), the base-shaped orifices allowing forming of thermoplastic strips at the bottom of the fastener members.

15. Apparatus as claimed in any one of Claims 8 to 14, wherein the cooling means includes a chill roll (28) located such that its uppermost peripheral surface is above the die lips (62) and a portion of its lateral peripheral surface extends below and to the die plate (52) side of said die lips (62) thereby angularly disposing the extrudate from the die extrusion channel (56) towards the extrudate issuing from the die block extrusion channel (44).

16. Apparatus as claimed in Claim 15 including liquid cooling means (39) for cooling the fastening elements joined to the film or sheet (46, 48 and 50), means for passing the film and fastening element combination around the chill roll (28), and an air jet apparatus (38) located adjacent a side of the roll (36) over which the combination passes, the air jet apparatus (38) including a tongue (39) extending tangentially beyond the circumference of the roll (36) whereby the air jet velocity is increased to remove excess water from the surface of said combination (46, 48 and 50).

17. Apparatus as claimed in Claims 15 or 16 wherein the chill roll (28) is positioned with respect to the extrusion die (16) to provide a predetermined distance (h) between a horizontal line extending tangentially of the outer circumferential surface of the chill roll (28) and the die lip (62) on the extrusion die (16), and a predetermined distance (d) between a vertical line extending from the extrusion channel (56) to a vertical line which is tangential to the outer circumferential surface of the chill roll (28).

18. Apparatus as claimed in any one of Claims 8 to 17 wherein the die block (22) is provided with at least one pair of die plates (52, 52 and 54), a first die plate (52) having an orifice (70) for extruding a combined base and male profile portion therefrom and a second die plate (54) having an orifice (72) for extruding a combined base and female profile portion therefrom, each combined base and profile portion forming a complimentary fastening element for sealing of an edge of a bag or container.

19. Apparatus as claimed in any one of Claims 8 to 18, wherein the extrusion channel (44) in the die block (22) has a depth (x) of greater than 0.028 cm (0.011 inch) at the exit thereof.

20. A cast relatively unorientated film or sheet having integral relatively stiff fastening members, each of the fastening members having base strips, the base strips being secured to the film or sheet for at least 90 percent of each base width, whereby the base strips provide rigidity for the fastening members for each opening and closing despite the cast film remaining relatively unorientated.

21. A film or sheet as claimed in claim 20 wherein the fastening members and the film or sheet are of materials differing in composition or colour.

**Patentansprüche**

1. Verfahren zum Herstellen eines integrierten thermoplastischen Verschlußelementes auf einem thermoplastischen Film oder einer Folie, die aus einer Schlitzdüse extrudiert wird, gekennzeichnet durch die Schritte, Extrudieren mindestens eines Verschlußelementes in einem Winkel zum Film, Verbinden des Verschlußelementes mit dem Film, Kühlen des Films und des Verschlußelementes nach dem Verbinden an einer Kühlwalze und Steuern, so daß die Verbindung näher an der Schlitzdüse als an der Kühlwalze erfolgt.

2. Verfahren nach Anspruch 1, dadurch gekennzeichnet, daß das Verbinden des Verschlußelementes und des Films so durchgeführt wird, daß es unmittelbar in der Nähe der Mündung der Schlitzdüse erfolgt, wobei das Verschlußelement eine Basis aufweist, die mit einem männlichen oder einem weiblichen Profil co-extrudiert wird, Strecken der Basis und des Profils in einem Winkel zum Film und Verbinden der Basis mit dem Film.

3. Verfahren nach Anspruch 2, dadurch gekennzeichnet, daß das Verschlußelement durch ein Werkzeug extrudiert wird, das unter der Schlitzdüse und in Richtung des Films angeordnet ist, um die Verbindung unmittelbar in der Nähe der Mündung der Schlitzdüse auszuführen.

4. Verfahren nach Ansprüchen 2 oder 3, dadurch gekennzeichnet, daß die Dicke des Querschnittes (x) der Basis mehr als 0,028 cm (0,011 inch) beträgt.

5. Verfahren nach Ansprüchen 2 bis 4, dadurch gekennzeichnet, daß die Basis in einem Abstand (y) von weniger als 0,030 cm (0,012 inch) von dem Film extrudiert wird.

6. Verfahren nach jedem der Ansprüche 1 bis 5, dadurch gekennzeichnet, daß ein Paar von Verschlußelementen gleichzeitig durch ein Werkzeug extrudiert wird, wobei jedes Verschlußelement eine Basis zur Verbindung mit dem Film besitzt, wobei eine Basis des Verschlußelementes einteilig mit dem männlichen Profil und die andere Basis des Verschlußelementes einteilig mit dem weiblichen Profil geformt wird.

7. Verfahren nach jedem der Ansprüche 1 bis 5, dadurch gekennzeichnet, daß eine Vielzahl von Paaren von Verschlußelementen gleichzeitig durch das Werkzeug extrudiert wird, wobei jedes der Verschlußelemente eine Basis zur Verbindung mit dem Film aufweist und eine Basis eines Paares der Verschlußelemente einteilig mit dem männlichen Profil und die andere Basis des Paares der Verschlußelemente einteilig mit dem weiblichen Profil geformt wird.

8. Vorrichtung zum Herstellen eines integrierten thermoplastischen Verschlußelementes auf einem gegossenen Film oder Folie, gekennzeichnet durch ein Extrusionswerkzeug (16) mit einem Extrusionskanal (56), der mit Extrusionsdüsenlippen (62) endet, wobei die Düsenlippen (62) Oberflächen haben, die eine Ebene definieren, eine Seite der Düse weist eine Fläche (80) auf, die winklig zum Extrusionskanal (56) und den Düsenlippen (62) angeordnet ist, einen Extrusionswerkzeugblock (22), der neben der Fläche (80) angeordnet ist, ein mit dem Extrusionswerkzeugblock (22) verbundenes Werkzeug (52), das eine führende Kante (74) besitzt, wobei die führende Kante (74) außerhalb der Ebene der Düsenlippen (62) angeordnet ist, der Extrusionswerkzeugblock (22) hat einen winklig darin angeordneten Extrusionskanal (44), der neben dem Ausgang der Düsenlippen (62) offen ist, um die Schärfe der Winkelstellung des aus dem Werkzeug (52) austretenden Extrudats zum Extrudat, das aus den Düsenlippen (62) austritt, zu erhöhen, und durch eine Kühlwalze (28), die unter dem Extrusionswerkzeug (16) und dem Werkzeug (52) angeordnet ist.

9. Vorrichtung nach Anspruch 8, dadurch gekennzeichnet, daß der Extrusionswerkzeugblock (22) bezüglich der winkligen Fläche (80) des Extrusionswerkzeuges (16) einstellbar montiert ist und die führende Kante (74) des Werkzeugs (72) den Extrusionsdüsenlippen (62) zugekehrt ist und unter dem Boden der Extrusionsdüsenlippen (62) angeordnet ist.

10. Vorrichtung nach Anspruch 9, dadurch gekennzeichnet, daß die führende Kante (74) des Werkzeugs (52) seitlich einwärts von der äußeren Kante derjenigen Düsenlippe (62), die dem Extrusionsdüsenblock (22) benachbart ist, zum Ausgang des Extrusionskanals (56) hin, angeordnet ist.

11. Vorrichtung nach Ansprüchen 9 oder 10, dadurch gekennzeichnet, daß Einstelleinrichtungen (27, 23) zum Einstellen des Werkzeuges (52) mit der führenden Kante (74) unter der Düsenlippe (62) neben dem Extrusionsdüsenblock (22) vorhanden sind.

12. Vorrichtung nach Anspruch 11, dadurch gekennzeichnet, daß der Abstand (y) der führenden Kante des Werkzeuges (52) von der Oberfläche des Films oder der Folie, die aus dem Extrusionskanal (56) austritt, kleiner als 0,030 cm (0,012 inch) ist.

13. Vorrichtung nach jedem der Ansprüche 8 bis 12, dadurch gekennzeichnet, daß die Breite der Düsenlippe (62) auf der Seite des Extrusionswerkzeuges (16), die dem Werkzeugblock (22) benachbart ist, von 0,0508 cm bis 0,0762 cm (0,02 bis 0,03 inch) beträgt, um die Wahrscheinlichkeit einer Beschädigung der Lippe zu vermindern.

14. Vorrichtung nach jedem der Ansprüche 9 bis 13, dadurch gekennzeichnet, daß das Werkzeug (52) Öffnungen in Form der Verschlüsse und Öffnungen in Form der Basis aufweist, die jeweils in offener Verbindung miteinander und mit dem Extrusionskanal (44) stehen, wobei die Öffnungen in der Form der Basis das Herstellen thermoplastischer Streifen am Boden der Verschlußteile ermöglichen.

15. Vorrichtung nach jedem der Ansprüche 8 bis 14, dadurch gekennzeichnet, daß die Kühleinrichtungen eine Kühlwalze (28) aufweisen, die so angeordnet ist, daß sich deren höchste Außenfläche über den Düsenlippen (62) befindet und daß sich ein Teil ihrer seitlichen Außenfläche unterhalb der Düsenlippen (62) auf der dem Werkzeug (52) zugewandten Seite erstreckt, so daß das Extrudat, das aus dem Extrusionskanal (56) austritt, in spitzem Winkel zum Extrudat, das aus dem Extrusionskanal (44) austritt, geführt wird.

16. Vorrichtung nach Anspruch 15, dadurch gekennzeichnet, daß Kühleinrichtungen (39) zum Kühlen der mit dem Film oder mit der Folie (46, 48, 50) verbundenen Verschlußelemente vorhanden sind, daß Einrichtungen zum Führen des Films und der Verschlußelementkombination um die Kühlwalze (28) vorhanden sind und daß eine Luftdüse (38) an der Seite der Walze (36) vorhanden ist, um die die Kombination geführt wird, wobei die Luftdüse (38) eine Zunge (39) besitzt, die sich tangential zum Umfang der Walze (36) erstreckt, so daß die Geschwindigkeit des Luftstromes erhöht wird, um Überschuß von Wasser von der Oberfläche der Kombination (46, 48, 50) zu entfernen.

17. Vorrichtung nach Ansprüchen 15 oder 16 dadurch gekennzeichnet, daß die Kühlwalze (28) so zum Extrusionswerkzeug (16) angeordnet ist, daß ein vorherbestimmter Abstand (h) zwischen einer horizontalen Linie, die sich tangential zur äußeren Umfangsfläche der Kühlwalze (28) erstreckt und der Düsenlippe (62) am Extrusionswerkzeug (16) vorhanden ist und daß ein vorherbestimmter Abstand (d) zwischen einer vertikalen Linie, die sich vom Extrusionskanal (56) aus erstreckt und einer senkrechten Linie, die tangential zur äußeren Umfangsfläche der Kühlwalze verläuft, vorhanden ist.

18. Vorrichtung nach jedem der Ansprüche 8 bis 17, dadurch gekennzeichnet, daß der Werkzeugblock (22) mindestens ein Paar Werkzeuge (52, 53, 54) aufweist, ein erstes Werkzeug (52) eine Öffnung (70) besitzt zum Extrudieren der mit dem männlichen Profilteil verbundenen Basis und ein zweites Werkzeug (54) eine Öffnung (72) besitzt zum Extrudieren der mit dem weiblichen Profilteil verbundenen Basis, wobei jedes mit einer Basis verbundene Profilteil ein komplementäres Verschlußelement bildet, zum Verschließen einer Kante eines Beutels oder eines Behälters.

19. Vorrichtung nach jedem der Ansprüche 8 bis 18, dadurch gekennzeichnet, daß der Extrusionskanal (44) im Extrusionswerkzeugblock (22) an seinem Ausgang eine Tiefe (x) von mehr als 0,028 cm (0,011 inch) aufweist.

20. Gegossener, relativ unorientierter Film oder Folie mit integrierten, relativ steifen Verschlußgliedern, wobei jedes der Verschlußglieder einen Basisstreifen aufweist, wobei die Basisstreifen mit dem Film oder der Folie auf mindestens 90% jeder Streifenbreite fest verbunden sind, so daß die Basisstreifen die Stabilität der Verschlußglieder für jedes Öffnen und Schließen ergeben, obwohl der gegossene Film relativ unorientiert verbleibt.

21. Film oder Folie nach Anspruch 20, dadurch gekennzeichnet, daß die Verschlußglieder und der Film oder die Folie aus Material unterschiedlicher Zusammensetzung oder Farbe sind.

## Revendications

1. Procédé de formation d'un élément de fixation thermoplastique intégré sur un film ou une feuille thermoplastique extrudé (e) par une filière à fente plate, procédé comprenant les étapes consistant à extruder au moins un élément de fixation qui est disposé obliquement en direction du film, à réunir l'élément de fixation et le film, à refroidir le film et l'élément de fixation sur un cylindre refroidisseur après la jonction, et à diriger la jonction de telle sorte qu'elle se produise plus près de la filière que du cylindre refroidisseur.

2. Procédé selon la revendication 1, dans lequel la jonction de l'élément de fixation et du film est dirigé de façon à se produire à proximité immédiate d'une des lèvres de la filière à fente plate, l'élément de fixation comprenant une base qui est extrudée en même temps qu'un profilé mâle ou femelle, en disposant la base et le profilé obliquement en direction du film, et en réunissant la base au film.

3. Procédé selon la revendication 2, dans lequel l'élément de fixation est extrudé par une plaque de filière, en plaçant cette plaque de filière au-dessous de la filière à fente plate et en direction du film de façon à assurer la jonction à proximité immédiate des lèvres de la filière à fente plate.

4. Procédé selon la revendication 2 ou la revendication 3, dans lequel la base a une section droite dont l'épaisseur (x) dépasse 0,028 cm (0,011 pouce).

5. Procédé selon l'une des revendications 2 à 4, dans lequel la base est extrudée à une distance (y) du film que est inférieure à 0,030 cm (0,012 pouce).

6. Procédé selon l'une des revendications 1 à 5 qui comporte l'étape consistant à extruder en même temps deux éléments de fixation à travers une plaque de filière, chaque élément de fixation ayant une base qui est conçue pour être réunie au film, la base de l'un des éléments de fixation comportant un profilé mâle qui est formé d'une seule pièce avec elle, et la base d'un autre élément de fixation comportant un profilé femelle qui est formé d'une seule pièce avec elle.

7. Procédé selon l'une des revendications 1 à 5, qui comporte l'étape consistant à extruder en même temps plusieurs paires d'éléments de fixation à travers une plaque de filière, chaque élément de fixation ayant une base qui est conçue pour être réunie au film, la base de l'un des éléments de fixation d'une paire d'éléments comportant un profilé mâle qui est formé d'une seule pièce avec elle, et la base d'un autre élément de fixation de cette paire d'éléments comportant un profilé femelle qui est formé d'une seule pièce avec elle.

8. Dispositif permettant de former un élément de fixation thermoplastique intégré sur un film ou une feuille moulé (e), ce dispositif comprenant une filière d'extrusion (16) comportant un canal d'extrusion (56) se terminant par des lèvres (62) de filière d'extrusion, les lèvres (62) de la filière présentant des surfaces qui définissent un plan, un côté de la filière présentant une face (80) qui est disposée obliquement en direction du canal d'extrusion (56) et des lèvres de filière (62), un bloc (22) de filière d'extrusion qui est placé à proximité de la face (80), une plaque de filière (52) fixée au bloc de filière (22), la plaque de filière (52) ayant un bord d'attaque (74), le bord d'attaque (74) étant situé hors du plan des lèvres de filière (62), le bloc de filière (22) comportant un canal d'extrusion (44) qui y est disposé obliquement et qui débouche à proximité de la sortie des lèvres de filière (62), de manière à augmenter la finesse angulaire de l'angle formé par l'extrudé qui sort de la plaque de filière (52) avec l'extrudé qui sort des lèvres de filière (62), et un cylindre refroidisseur (28) placé au-dessous de la filière d'extrusion (16) et de la plaque de filière (52).

9. Dispositif selon la revendication 8, dans lequel le bloc de filière (22) est monté de manière réglable par rapport à la face oblique (80) de la filière d'extrusion (16), le bord d'attque (74) de la plaque de filière (52) étant tourné vers les lèvres (62) de la filière d'extrusion et étant situé au-dessous de la base des lèvres (62) de la filière d'extrusion.

10. Dispositif selon la revendication 9, dans lequel le bord d'attaque (74) de la plaque de filière (52) est placé latéralement vers l'intérieur du bord extérieur de celle des lèvres de filière (62) qui lui correspond, à proximité du bloc de filière (22), dans la direction de la sortie du canal (56) de la filière d'extrusion.

11. Dispositif selon la revendication 9 ou la revendication 10, comportant des moyens de réglage (27, 23) pour mettre en place la plaque de filière (52), de façon que son bord d'attaque (74) se trouve sous les lèvres de filière (62) à proximité du bloc de filière (22).

12. Dispositif selon la revendication 11, dans lequel la distance (y) entre le bord d'attaque de la plaque de filière (52) et la surface d'un film ou d'une feuille sortant du canal (56) d'extrusion de la filière est inférieure à 0,030 cm (0,012 pouce).

13. Dispositif selon l'une des revendications 8 à 12, dans lequel l'écartement des lèvres de filière (62), du côté de la filière d'extrusion (16) proche du bloc de filière (22) est de 0,0508 cm à 0,0762 cm (0,02 à 0,03 pouce) pour réduire les risques d'endommagement des lèvres de la filière.

14. Dispositif selon l'une des revendications 9 à 13, dans lequel la plaque de filière (52) comporte des orifices de la forme des éléments de fixation et des orifices de la forme de la base, en communication ouverte les uns avec les autres et avec le canal (44) d'extrusion du bloc de filière, les orifices qui ont la forme de la base permettant la formation de bandes thermoplastiques à la base des éléments de fixation.

15. Dispositif selon l'une des revendications 8 à 14, dans lequel le moyen de refroidissement comporte un cylindre refroidisseur (28) placé de telle sorte que sa surface périphérique supérieure extrême se trouve au-dessus des lèvres de filière (62) et qu'une partie de sa surface périphérique latérale se trouve au-dessous et du côté de la plaque de filière (52) desdites lèvres de filière (62), disposant ainsi obliquement l'extrudé qui sort du canal d'extrusion (56) de la filière vers l'extrudé qui sort du canal d'extrusion (44) du bloc de filière.

16. Dispositif selon la revendication 15, comportant un moyen de refroidissement à liquide (39) pour refroidir les éléments de fixation qui sont réunis au film ou à la feuille (46, 48 et 50), un moyen pour faire passer l'ensemble formé par le film et les éléments de fixation autour du cylindre refroidisseur (28), et un dispositif à jet d'air (38) placé à proximité d'un côté du cylindre (36) sur lequel passe cet ensemble, le dispositif (38) à jet d'air comportant une languette (39) qui se prolonge tangentiellement au-delà de la circonférence du cylindre (36), de telle sorte que la vitesse du jet d'air est augmentée pour enlever l'excès d'eau de la surface dudit ensemble (46, 48 et 50).

17. Dispositif selon les revendications 15 ou 16, dans lequel le cylindre refroidisseur (28) est disposé, par rapport à la filière d'extrusion (16), de façon à ménager une distance prédéterminée (h) entre une ligne horizontale longeant tangentiellement la surface circonférentielle extérieure du cylindre refroidisseur (28) et les lèvres de filière (62) sur la filière d'extrusion (16), et une distance prédéterminée (d) entre une ligne verticale allant du canal d'extrusion (56) à une ligne verticale qui est tangentielle à la surface circonférentielle extérieure du cylindre refroidisseur (28).

18. Dispositif selon l'une des revendications 8 à 17, dans lequel le bloc de filière (22) est muni d'au moins une paire de plaques de filière (52, 52 et 54), une première plaque de filière (52) comportant un orifice (70) pour en extruder une partie combinée base-profilé mâ e, et une seconde plaque de filière (54) comportant un orifice (72) pour en extruder une partie combinée base-profilé femelle, chaque partie combinée base-profilé formant un élément de fixation complémentaire pour la fermeture hermétique d'un bord d'un sac ou d'un récipient.

19. Dispositif selon l'une des revendications 8 à 18, dans lequel le canal d'extrusion (44) du bloc de filière (22) a une profondeur (x) de plus de 0,028 cm (0,011 pouce) à sa sortie.

20. Film ou feuille moulé (e) et relativement non orienté (e) comportant des éléments de fixation relativement rigides qui lui sont intégrés, chacun des éléments de fixation comportant des bandes de base, ces bandes de base étant fixées au film ou à la feuille sur au moins 90% de la largeur de chaque base, de sorte que les bandes de base donnent aux éléments de fixation une rigidité suffisante pour chaque ouverture malgré que le film reste relativement non orienté.

21. Film ou feuille selon la revendication 20, dans lequel les éléments de fixation et le film ou la feuille sont faits de matériaux différents par leur composition ou par leur couleur.

*Fig. 1*

*Fig. 2*

*Fig. 2A*

Fig. 3

Fig. 4

Fig. 4P

Fig. 5

Fig. 5P

Fig. 6

Fig. 6P

Fig. 7

Fig. 7P